# DEMANDE DE BREVET EUROPEEN

(11) **EP 0 526 274 A1**
(43) Date de publication de la demande: **03.02.1993**
(21) Numéro de dépôt: 92401782.5
(22) Date de dépôt: 25.06.1992
(51) Int. Cl.: B60T 8/18, B60T 13/563

(54) **Servomoteur double d'assistance au freinage**

(30) Priorité: 30.07.1991 FR 9109665
(71) Demandeur: ALLIEDSIGNAL EUROPE SERVICES TECHNIQUES, F-93700 Drancy (FR)
(72) Inventeur: Castel, Philippe, Bendix Europe Serv. Techn., F-93700 Drancy (FR)
(74) Mandataire: Bentz, Jean-Paul

(57) **Abrégé**

L'invention concerne un servomoteur double d'assistance au freinage pour véhicule automobile dotée d'une valve permettant de faire varier le rapport d'assistance en fonction de la charge du véhicule.

En plus de deux pistons (64, 66) articulés sur un bras (72), cette valve comporte un poussoir (80) animé par un troisième piston (68) sur une première face duquel est appliquée une première force représentative de la charge du véhicule et sur une seconde face duquel est appliquée une seconde force de nature élastique, antagoniste de la première, ce troisième piston adoptant, sous l'effet des première et seconde forces, une position d'équilibre qui détermine celle d'un point variable d'appui pour le levier que constitue le bras (72). Par ailleurs, le bras, le poussoir et les trois pistons sont montés dans un même corps, le bras et le poussoir étant logés dans une cavité unique (74) qui est définie dans ce corps, soumise à une basse pression, et vers laquelle sont tournées les secondes faces des trois pistons.

## Description

La présente invention concerne de façon générale les servomoteurs à dépression utilisés à bord des véhicules automobiles pour assurer une aide au freinage de ceux-ci, et plus précisément un servomoteur double, ou encore appelé tandem, permettant d'augmenter l'assistance au freinage.

Plus particulièrement encore, l'invention concerne un servomoteur double d'assistance au freinage pour véhicule automobile comportant dans une enveloppe extérieure, une cloison fixe délimitant à l'intérieur de l'enveloppe un volume avant et un volume arrière, ces volumes étant tous deux divisés de façon étanche en des chambres avant et arrière respectives par des cloisons mobiles avant et arrière respectives et indépendantes, au moins un moyen élastique tendant à déplacer une des cloisons mobiles vers l'arrière, au moins un passage reliant les deux chambres avant, une différence de pression étant établie entre les chambres avant et arrière du volume arrière par un premier moyen de valve lors de l'actionnement d'une tige de commande pour actionner une tige de sortie, et un deuxième moyen de valve étant prévu pour faire varier la différence des pressions entre les chambres du volume avant en fonction d'une part de la pression régnant dans la chambre arrière du volume arrière, et d'autre part, de la charge du véhicule, ce deuxième moyen de valve comprenant un premier piston sur une première face duquel est appliquée la pression régnant dans ladit chambre arrière du volume arrière et dont une seconde face est montée à rotation à une première extrémité d'un bras, un deuxième piston dont une première face commande un clapet susceptible de relier ladite chambre arrière du volume avant à l'atmosphère et une seconde face est montée à rotation à une seconde extrémité dudit bras, un poussoir adoptant une position qui est fonction de ladite charge et déterminant un point variable d'appui pour ledit bras de manière que ce dernier forme levier.

Un tel servomoteur qui permet de moduler la pression d'assistance au freinage en fonction de la charge du véhicule, est par exemple décrit dans la demande de brevet JP-A-59 089 258.

En dépit de son intérêt fonctionnel, le dispositif décrit dans ce document antérieur est d'une réalisation coûteuse et délicate et la présente invention a pour objet de pallier ces défauts.

A cette fin, le servomoteur de l'invention est essentiellement caractérisé en ce qu'il comporte un troisième piston sur une première face duquel est appliquée une première force représentative de la charge du véhicule et sur une seconde face duquel est appliquée une seconde force de nature élastique, antagoniste de la première, ce troisième piston adoptant, sous l'effet des première et seconde forces, une position d'équilibre qui détermine celle dudit point variable d'appui, et en ce que le bras, le poussoir et les trois pistons sont montés dans un même corps, le bras et le poussoir étant logés dans une cavité unique qui est définie dans ce corps, soumise à une basse pression, et vers laquelle sont tournées les secondes faces des trois pistons.

De préférence une extrémité du poussoir est pourvue d'une première roulette roulant sur une surface interne de ladite cavité dans une direction sensiblement axiale par rapport audit bras, et d'une seconde roulette, entraînée en translation en même temps que la première, et offrant audit bras un appui situé entre les deux extrémités de ce bras et constituant ledit point variable d'appui.

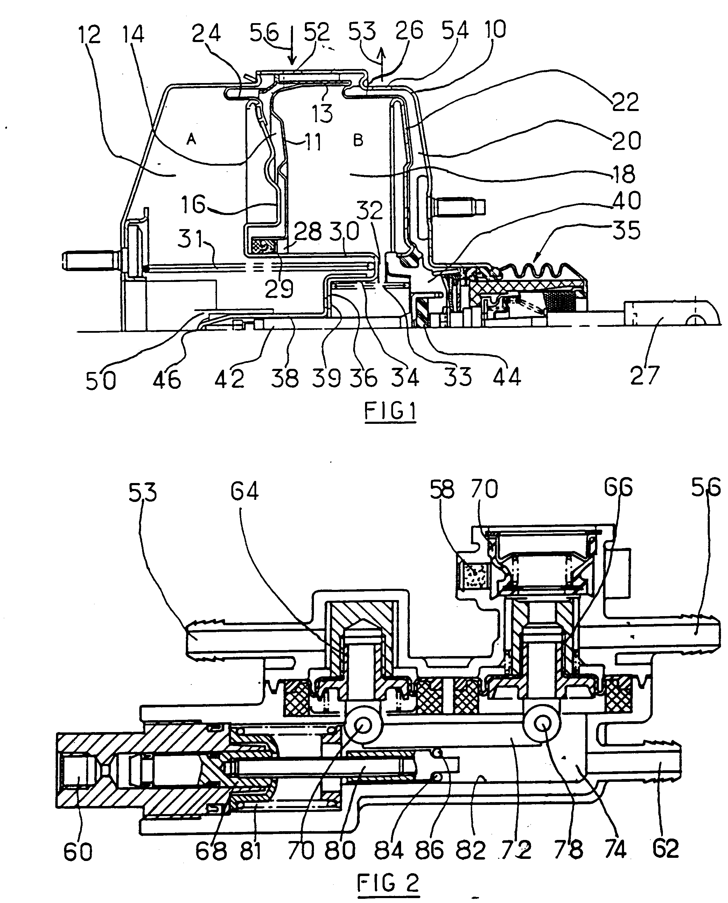

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche unique de dessin sur laquelle la Figure 1 représente schématiquement en demi-coupe un servomoteur double d'assistance au freinage réalisé conformément à l'invention et, la Figure 2 représente schématiquement en coupe le deuxième moyen de valve selon l'invention.

Par convention, on appelle "avant" la direction dans laquelle les pièces se déplacent lorsqu'elles sont actionnées et "arrière" la direction dans laquelle les pièces se déplacent pour revenir à leur position de repos. Ainsi, sur la Figure, l'avant est situé à gauche et l'arrière est situé à droite.

En référence à la Figure 1, le servomoteur double représenté comporte de façon classique une enveloppe extérieure 10, dont l'intérieur est divisé par une cloison fixe 11 en un volume avant A et un volume arrière B.

Le volume avant A est divisé en une chambre avant 12 et une chambre arrière 14 par une paroi mobile 16. De même, le volume arrière B est divisé en une chambre avant 18 et une chambre arrière 20 par une paroi mobile 22. Chaque paroi mobile 16,22 est pourvue d'une membrane 24,26 respectivement dont le bord périphérique extérieur est fixé de façon étanche à l'enveloppe extérieure 10 pour séparer de façon étanche les chambres avant 12,18 des chambres arrière 14,20 de chaque volume.

De façon classique, les chambres avant de chaque volume communiquent entre elles, et sont reliées à une source de dépression.

Lors de l'actionnement de la tige d'entrée 27 reliée à une pédale de frein (non représentée), des moyens de valve 35 interrompent cette communication et laissent pénétrer de l'air à la pression atmosphérique dans la chambre arrière 20 du volume arrière B, ce qui provoque une différence de pression sur la paroi mobile 22 qui avance alors à l'encontre de l'action du ressort de rappel 31 et procurent l'assistance recherchée dans T'actionnement d'un maître-cylindre (non représenté).

Les cloisons mobiles avant 16 et arrière 22 sont indépendantes l'une de l'autre.

Dans le mode de réalisation représenté Figure 1, la cloison fixe 11 comporte une ouverture centrale 28 dans laquelle coulisse de façon étanche grâce à un joint 29 un prolongement cylindrique 30 de la cloison mobile avant 16 dirigé vers l'arrière. Ce prolongement 30 est raccordé par un épaulement 32 dirigé radialement vers l'intérieur à un prolongement cylindrique 34 dirigé vers l'avant. Ce prolongement 34 est raccordé par un épaulement 36 dirigé radialement vers l'intérieur à un prolongement cylindrique 38 dirigé vers l'avant et fermé à son extrémité avant par un fond 46.

La cloison mobile 16, ainsi formée avec ses parties référencées 30,32,34,36,38, et 46 forme donc une paroi mobile continue isolant la chambre avant 12 de la chambre arrière 14 du volume avant A. Le passage reliant les deux chambres avant 12 et 18 est réalisé de façon très simple par une ouverture 39 pratiquée directement dans la cloison mobile avant 16.

La cloison mobile 22 du volume arrière est classique et constitue la jupe du piston 40 actionné par le moyen de valve 35, et actionnant une tige de sortie 42 par l'intermédiaire d'un disque de réaction 44. La tige de sortie 42 pénètre avec jeu dans le prolongement cylindrique 38 et, dans la position de repos représentée, vient en butée contre le fond 46.

La cloison mobile arrière 22 est rappelée en position de repos par un ressort 33, qui prend appui sur la face arrière de la cloison mobile avant 16, sur son épaulement 36, de sorte que les deux ressorts 31 et 33 prennent appui de part et d'autre de la cloison mobile 16.

L'ensemble tige de sortie 42-prolongement cylindrique 38 actionne un maître-cylindre dont seule la partie arrière 50 du piston a été représentée. On comprend ainsi que l'actionnement du servomoteur par la tige d'entrée 27 entraîne l'actionnement du maître-cylindre, d'une façon identique à celle d'un servomoteur classique.

Pour moduler maintenant l'assistance en fonction de la charge, on applique à la chambre arrière 14 du volume avant A une pression qui est fonction de celle régnant dans la chambre arrière 20 du volume arrière B et de la charge du véhicule à l'aide d'un deuxième moyen de valve tel que représenté Figure 2.

Une ouverture 54 pratiquée dans l'enveloppe extérieure 10 permet de prélever la pression régnant dans la chambre arrière 20 du volume arrière B pour une canalisation 53.

Une autre ouverture 52 permet de connecter une canalisation 56 à la chambre arrière 14 du volume avant A. Les canalisations 53 et 56 ont été représentées symboliquement Figure 1, mais sont données plus en détail Figure 2 à laquelle on fera maintenant référence.

Le deuxième moyen de valve comporte plusieurs canalisations. On l'a vu, la canalisation 53 est reliée à la chambre arrière 20 du volume arrière B ; la canalisation 56 est reliée à la chambre arrière 14 du volume avant A ; la canalisation 62 est reliée à la source de dépression, par exemple à laquelle sont reliée les deux chambres avant 12 et 18 ; et la canalisation 60 est reliée à un détecteur fluidique (non représenté) de la charge du véhicule.

Un tel détecteur ne sera pas décrit ici. Il pourra être favorablement constitué par une pièce d'appui pour ressort de suspension, telle que décrite dans le document FR-A-2 649 046, faisant capteur de la pression régnant dans une chambre étanche ménagée entre un ressort de suspension et une base.

Le moyen de valve représenté comprend trois pistons 64, 66, 68, disposés de manière à coulisser de façon étanche dans un même corps.

Une face du piston 64 reçoit la pression régnant dans la chambre arrière 20 du volume arrière B par la canalisation 53.

L'autre face de ce piston 64 est montée à rotation par un axe 70 à l'extrémité d'un bras 72 dans une chambre 74 unique définie dans le corps de ce second moyen de valve et reliée à la source de dépression par la canalisation 62.

Le piston 66 présente une face susceptible de manoeuvrer un clapet de valve 76 ouvrant ou fermant une communication entre une entrée d'air à pression atmosphérique 58 et la canalisation 56 reliée à la chambre arrière 14 du volume avant A. L'autre face de ce piston 66 est montée à rotation à l'autre extrémité du bras 72 par un axe 78.

Le piston 68 reçoit sur l'une de ses faces une pression fonction de la charge du véhicule et issue du détecteur de pression par la canalisation 60. Son autre face comporte un prolongement faisant poussoir 80. Le piston 68 est rappelé en position de repos à l'aide d'un ressort précontraint 81.

L'extrémité du poussoir 80 opposée au piston 68 est pourvue d'un élément prenant appui d'une part sur une surface fixe 81 de la chambre 74 et d'autre part sur le bras 72 entre ses deux axes d'extrémité 70, 78. Cet élément est favorablement constitué de deux roulettes 84, 86 évitant ainsi d'engendrer des forces de frottement trop importantes et déterminant sur le bras 72 un point variable d'appui de manière que le bras 72 constitue un levier.

On comprendra qu'avec cet arrangement, le piston 68 prend une position fonction de la charge du véhicule, position qui détermine celle du point d'appui de la roulette 86 sur le bras 72.

Ainsi lors d'un freinage commandé par la tige d'actionnement 27, la pression dans la chambre arrière du volume arrière B va mouvoir le piston 64. Le mouvement de ce dernier est transmis au piston 66 avec un coefficient multiplicateur fonction de la position exacte de la roulette 86 sur le bras 72, c'est-à-dire de la charge du véhicule.

L'assistance apportée par le servomoteur selon l'invention est donc bien modulée en fonction de la charge du véhicule. Le disque de réaction 44 ne recevant pas la contre réaction de l'effort exercé par la cloison mobile 16 du volume avant A, l'assistance assurée par le volume avant A n'est donc pas ressentie par le conducteur.

Bien que seul un mode de réalisation de l'invention ait été décrit, il est évident que de nombreuses modifications pourront être apportées par l'homme du métier sans sortir du cadre de la présente invention.

On pourra par exemple utiliser de l'air ou un autre gaz sous pression au lieu de la pression atmosphérique. De même les volumes avant et arrière peuvent ne pas présenter un même diamètre, le volume avant pouvant être constitué par une simple chambre additionnelle.

## Revendications

1. Servomoteur double d'assistance au freinage pour véhicule automobile comportant dans une enveloppe extérieure (10) une cloison fixe (11) délimitant à l'intérieur de l'enveloppe (10) un volume avant (A) et un volume arrière (B), ces volumes (A,B) étant tous deux divisés de façon étanche en des chambres avant (12,18) et arrière (14,20) respectives par des cloisons mobiles avant (16) et arrière (22) respectives et indépendantes, au moins un moyen élastique (31) tendant à déplacer une (16) des cloisons mobiles avant (16, 22) vers l'arrière, au moins un passage (39) reliant les deux chambres avant (12,18), une différence de pression étant établie entre les chambres avant (18) et arrière (20) du volume arrière (B) par un premier moyen de valve (35) lors de l'actionnement d'une tige de commande (27) pour actionner une tige de sortie (42), et un deuxième moyen de valve étant prévu pour faire varier la différence des pressions entre les chambres (12, 14) du volume avant (A) en fonction d'une part de la pression régnant dans la chambre arrière (20) du volume arrière (B), et d'autre part, de la charge du véhicule, ce deuxième moyen de valve comprenant un premier piston (64) sur une première face duquel est appliquée la pression régnant dans ladit chambre arrière (20) du volume arrière (A) et dont une seconde face est montée à rotation à une première extrémité d'un bras (72), un deuxième piston (66) dont une première face commande un clapet (76) susceptible de relier ladite chambre arrière (14) du volume avant à l'atmosphère et une seconde face est montée à rotation à une seconde extrémité dudit bras (72), un poussoir (80) adoptant une position qui est fonction de ladite charge et déterminant un point variable d'appui pour ledit bras (72) de manière que ce dernier forme levier, caractérisé en ce qu'il comporte un troisième piston sur une première face duquel est appliquée une première force représentative de la charge du véhicule et sur une seconde face duquel est appliquée une seconde force de nature élastique, antagoniste de la première, ce troisième piston adoptant, sous l'effet des première et seconde forces, une position d'équilibre qui détermine celle dudit point variable d'appui, et en ce que le bras, le poussoir et les trois pistons sont montés dans un même corps, le bras et le poussoir étant logés dans une cavité unique qui est définie dans ce corps, soumise à une basse pression, et vers laquelle sont tournées les secondes faces des trois pistons.

2. Servomoteur suivant la revendication 1, caractérisé en ce qu'une extrémité du poussoir est pourvue d'une première roulette roulant sur une surface interne de ladite cavité dans une direction sensiblement axiale par rapport audit bras, et d'une seconde roulette, entraînée en translation en même temps que la première, et offrant audit bras un appui situé entre les deux extrémités de ce bras et constituant ledit point variable d'appui.

3. Servomoteur selon la revendication 1 ou 2, caractérisé en ce que ladite première force est engendrée par un capteur fluidique de charge.
